# EUROPEAN PATENT SPECIFICATION

(11) **EP 2 859 544 B1**
(45) Date of publication and mention of the grant of the patent: **01.04.2020**
(21) Application number: 13805158.6
(22) Date of filing: 10.06.2013
(51) Int. Cl.: G08G 1/16, B60Q 1/00, G09G 1/16, B60R 1/12, B60Q 9/00

(54) **WARNING SYSTEM**
WARNSYSTEM
SYSTÈME D'AVERTISSEMENT

(30) Priority: 11.06.2012 SE 1250601
(43) Date of publication of application: 15.04.2015
(73) Proprietor: Scania CV AB, 151 87 Södertälje (SE); Volkswagen Aktiengesellschaft, 38440 Wolfsburg (DE)
(72) Inventor: RICKNÄS, Daniel, SE-116 64 Stockholm (SE); KLEEN, Andro, DE-47057 Duisburg (DE)
(74) Representative: Bjerkéns Patentbyrå KB (Stockholm)
(86) International application number: PCT/SE2013/050654
(87) International publication number: WO 2013/187828

(56) References cited:
- WO-A1-2010/064963
- DE-A1-102008 003 936
- US-A- 4 109 235
- US-A1- 2004 046 647
- US-A1- 2007 182 527
- US-A1- 2010 020 170
- US-A1- 2010 164 706

## Description

### Field of the invention

The present invention relates to a warning system according to the preamble of the independent claim. The invention relates in particular to a warning system adapted to making it easier for drivers to deal with overtaking.

The present invention relates in particular to an indicating system adapted to preferably continuously informing the driver of a freight vehicle when overtaking another vehicle as to when the overtaking has been completed and it is safe to move back into the traffic lane in front of the vehicle overtaken.

### Background to the invention

It is now usual for truck drivers to facilitate overtaking by the driver of the overtaken vehicle flashing its headlamps as a signal to the overtaking vehicle when there is room for it to return to the traffic lane in front of the overtaken vehicle.

It may take a relatively long time for one truck to overtake another, inter alia because the vehicles may be long and heavily laden. It is important that the overtaking vehicle should not stay too long in the overtaking lane, as it would then block other traffic for an unnecessarily long time. As mentioned above, truck drivers often help one another to facilitate overtaking, but not all of them do so. There is also a problem when trucks overtake other vehicles whose drivers are not accustomed to signalling when overtaking has been completed.

Currently for cars and trucks there are existing systems adapted to monitoring traffic lanes on one or both sides of a vehicle to check whether there are any vehicles alongside the host vehicle, e.g. at blind angles. These systems indicate to the driver whether there is a vehicle in any adjacent traffic lane, by generating some form of visual warning close to the rearview mirror or at the A-pillar, i.e. the part of the vehicle body which is situated forward of the front doors, serves as roof support and has the windscreen fastened to its sides. The warning may also take the form of an acoustic warning which may be combined with the visual warning. If the driver begins moving into a lane in which there is already a vehicle, the warning will escalate.

The patent specifications referred to below are examples of systems adapted to indicating, and warning drivers of, objects or vehicles in their vehicle's surroundings.

WO2010/064963 A1 discloses a lane change assistance system for a vehicle, in particular for a vehicle such as a heavy vehicle, e.g. a cargo vehicle with or without a trailer attached, when overtaking another vehicle and indicating when it is possible to return to his previous lane again, i.e. when the overtaken vehicle has been passed with such a distance that the overtaking vehicle can turn into the lane in which the overtaken vehicle is driving. Relative speed between vehicles is taken into account.

US-2010/0020170 refers to an image processing system for a vehicle which is adapted inter alia to identifying an object behind or alongside the host vehicle and then presenting in or close to the rearview mirror a clarified version of the object. This may for example be done by generating a pattern which is superimposed in the mirror to more clearly present the object to the driver.

EP-2073185 refers to a method and a device for generating and presenting warning signals if an object is detected outside a vehicle, e.g. the speed of the object may be detected. The warnings are for example presented close to the vehicle's A-pillars.

US-7,079,017 refers to a warning system for motor vehicles. The system comprises a sensor to detect an obstacle near to the vehicle, a device to generate a signal in response to the obstacle detected and an indicating device which generates an alarm for the driver.

The warning system is particularly adapted to causing the driver to direct attention towards where the obstacle is situated. This is for example done by providing LEDs close to the rearview mirrors and having them flash if the driver's attention is to be drawn to obstacles which are visible in a specific rearview mirror.

US-2009/0063053 refers to a method and a system for identifying blind angles and providing warnings by visual indicators, e.g. via LEDs or screens. The visual indicators are for example determined on the basis of the relative speed of a vehicle approaching from behind relative to that of the host vehicle.

DE-102008003936 refers to a device adapted to presenting on a rearview mirror of a freight vehicle warning messages which give inter alia an indication of a relative speed between the host vehicle and a nearby vehicle.

In the case of trucks it is not sufficient to learn that there is a vehicle alongside the host vehicle, since the latter may be very long. It is therefore also important to know the location in the longitudinal direction of the vehicle in the adjacent traffic lane relative to the host vehicle. There are solutions which address this problem by fitting round the truck a plurality of mirrors, up to seven in number. This means that when wishing to verify that the vehicle can proceed safely the driver has to look at all of the mirrors, distracting attention from other systems on board, with consequent potential for jeopardising the handling of the vehicle.

There is thus a need to make it easier for the driver to monitor the surroundings of the host vehicle when changing traffic lanes, without contributing to a yet more complex driver environment.

The object of the present invention is to propose a warning system which avoids the disadvantages of today's systems.

### Summary of the invention

The above objects are achieved with the invention defined by the independent claim.

Preferred embodiments are defined by the dependent claims.

The system according to the invention is adapted to monitoring the traffic lane nearest to the host vehicle and also to generating an indication which expresses the location of a vehicle in an adjacent lane and which indicates when there is no vehicle alongside the host vehicle, i.e. when the lane is unoccupied.

The length of the host vehicle is known to the warning system according to the invention. When a vehicle is alongside the host vehicle, i.e. the host vehicle and any trailer, the vehicle's driver will, according to the invention, be informed that this is so.

One embodiment pertains to an overtaking indication in or close to the vehicle's side rearview mirrors.
For example, the vehicle is presented in the mirror or by a schematic indication in or close to the rearview mirror.
When the overtaken vehicle has been passed and there is room for the host vehicle to move into the traffic lane in front of the overtaken vehicle, the warning indication changes in such a way that the driver receives clear information that it is safe to switch to the lane in front of the overtaken vehicle.

The overtaking indication may be presented in a number of different ways.
It may for example be given by circling the image of the vehicle which is being overtaken in the rearview mirror throughout the overtaking period. It may also be displayed in a separate part of the viewing device, e.g. in an upper part of the viewing surface.
When the vehicle has been overtaken, the overtaking indication is no longer displayed, thereby indicating to the driver that it is safe to move back in ahead of the overtaken vehicle.

In another embodiment the nature of the overtaking indication changes when it is safe to move back in, e.g. a red indication may change to a green indication.

In one embodiment, when it is safe to move back in, the overtaking indication is generated in the form of one or more flashing lights in or close to the viewing surface, which resemble the lamp flashing sometimes used by today's drivers to indicate that the overtaking vehicle may now move back in ahead.

In another embodiment the warning system is adapted to measuring the speed of the vehicle being overtaken. If the measurement shows that the vehicle is accelerating, no indication that it is safe to move back in ahead of it is given.

In one embodiment the warning indication will only indicate that the overtaking is approved, i.e. that it is safe to move back into the lane ahead of the overtaken vehicle, if the difference between the host vehicle's speed and that of the overtaken vehicle is zero or more than zero. In other words, the overtaking will only be approved if the host vehicle's speed is equal to or greater than that of the overtaken vehicle.

The warning system according to the present invention has many advantages.

Firstly, the driver will receive an indication when it is safe to move back into the traffic lane after an overtaking operation, irrespective of the type of vehicle overtaken.

Secondly, the warning system in one embodiment will only indicate overtaking approved when there is room to return to the traffic lane if the overtaken vehicle is travelling at the same speed or more slowly than the host vehicle.

Thirdly, the driver will receive a reliable indication of when the overtaking is approved and it is possible to return to the traffic lane. At present not all drivers flash when they have been overtaken, or they flash at an inappropriate time.

Fourthly, the warning system according to the present invention means that a driver who has been overtaken no longer needs to flash at every overtaking vehicle.

### Brief description of drawings

Figure 1 is a block diagram illustrating a number of embodiments of the present invention.
Figures 2 and 3 are schematic diagrams of a road with two traffic lanes illustrating the present invention.

### Detailed description of preferred embodiments of the invention

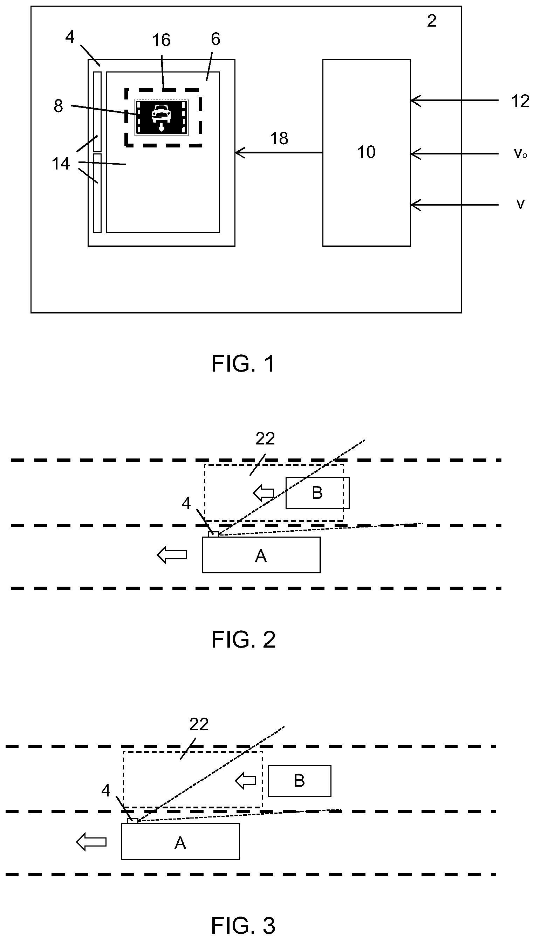

The invention will now be described in detail with reference to the block diagram in Figure 1. It thus relates to a warning system 2 for a vehicle, e.g. a truck, a bus or a car. The system comprises at least one viewing device 4 with a viewing surface 6 adapted to presenting objects 8 which are in the vehicle's vicinity. The viewing device takes in one embodiment the form of a rearview mirror fitted on the outside of the vehicle to provide the driver with a reflected image of the mirror's viewing surface. The invention is also applicable in the case of a rearview mirror fitted in the vehicle. The viewing surface is preferably a semitransparent reflective surface.
In another embodiment the viewing device takes the form of a VDU, e.g. of LCD type.

The warning system further comprises a processing unit 10 adapted to receiving one or more sensor signals 12 from one or more sensors adapted to measuring one or more predetermined parameters of objects in the vehicle's vicinity and to using said parameters as a basis for determining whether an object is in a predefined overtaking zone 22 (see Figures 2 and 3).

The sensors take for example the form of a speed sensor, e.g. radar sensors, and in one embodiment they are situated close to the viewing device. The speed signal for an object in the vehicle's vicinity is represented by vₒ in the diagram. The sensors comprise in one embodiment sensors adapted to measuring the distance from objects in the vehicle's vicinity, and take for example the form of radar sensors, capacitive sensors or other suitable sensors. The processing unit 10 is also adapted to receiving a signal which represents the speed v of the host vehicle.

The warning system comprises at least one indicating means 14 situated close to said viewing device 4 and adapted to generating at least one warning indication 16 for presentation on or close to the viewing surface 6 of the viewing device, on the basis of a display signal 18 generated by said processing unit 10. The indicating means 14 in one embodiment is situated behind said viewing surface, which then takes the form of a semitransparent reflective surface. The indicating means takes for example the form of LEDs, or some other light-generating means, which are therefore situated behind the viewing surface. The indicating means is so arranged that any desired part or parts of the viewing surface may be marked by activating the indicating means.

The warning system is adapted to being in either of two overtaking states, viz. a first state which applies when at least one object 8 is in the overtaking zone, and a second state which applies when there are no objects in the overtaking zone, and the overtaking indication 16 is adapted to changing on the basis of whichever overtaking state applies.

In one embodiment the overtaking indication is adapted to giving a first indication when the first state applies and a second indication when the second state applies.

The first indication comprises for example a red marking in part of the viewing surface, e.g. in an upper part of the surface. The second indication comprises for example a green marking in the upper part of the viewing surface, i.e. the red marking being replaced by the green marking when there are no longer any objects in the overtaking zone.

In another embodiment the indicating means is adapted to generating one or more optical signals, e.g. in the form of flashing lights, when the first state changes to the second state, in response to the display signal 18. This resembles the lamp flashing which sometimes comes from an overtaken vehicle.

The predetermined overtaking zone 22 (see Figures 2 and 3) is defined as a region in an adjacent traffic lane which is related to the size of the host vehicle. The length of the overtaking zone is preferably the length of the host vehicle plus a predetermined safety length. The predetermined safety length is for example of the order of 5-10 metres and may for example be determined on the basis of the host vehicle's speed and that of the overtaken vehicle in such a way that the higher their speeds the greater the safety length. The width of the safety zone preferably corresponds substantially to that of the traffic lane. Figures 2 and 3 depict the overtaking zone 22 as a rectangle in the adjacent lane. This is to be regarded as a schematic illustration of what is achieved by employing the invention, viz. monitoring a region in the host vehicle's vicinity to facilitate overtaking. In applications of the invention the overtaking zone comprises a number of overlapping sectors monitored by the sensors in order to cover reliably the whole of the overtaking zone.

In one embodiment, one of the parameters is related to the speed of said object vₒ, i.e. to the vehicle being overtaken, which the processing unit is adapted to comparing with the host vehicle's speed v by determining Δv=v-vₒ. In this embodiment the second state applies if there are no objects in said overtaking zone and Δv is equal to or greater than zero. It means that the overtaking indication will not indicate that overtaking has been completed and that there is room to move back into the traffic lane ahead of the overtaken vehicle if the overtaken vehicle is travelling faster than the host vehicle.
In a variant of this embodiment the processing unit is also adapted to calculating the acceleration of the overtaken vehicle. If the overtaken vehicle presents acceleration greater than that of the host vehicle, the overtaking indication will not indicate that the overtaking has been completed.

In Figure 1 the overtaking indication 16 is depicted as a broken-line rectangle but may be of any desired geometrical shape appropriate to identifying said object, e.g. a circle, a square or a rectangle.

In one embodiment the processing unit 10 is adapted to superimposing said overtaking indication on the image of the object so that the overtaking indication surrounds said object. This is preferably done by analysing the image of the object in order to determine the object's location in the image. This location serves as a basis for identifying where the overtaking indication has to be positioned so that the object is surrounded and clearly indicated.

The overtaking indication 16 in one embodiment is adapted to changing dynamically on the basis of whichever overtaking state the warning system is in, as regards both colour, shape and presentation, e.g. flashing.

In a further embodiment said indicating means 14 is situated along the edge of the viewing surface 6 and adapted to indicating the location of a vehicle in an adjacent traffic lane. The indicating means then takes for example the form of LEDs, which may be grouped in two sections, viz. an upper section and a lower section.

According to the invention the indicating means 14 is thus adapted to indicating when a vehicle in an adjacent traffic lane has been overtaken. This involves using the indicating means which are situated at the edge of the viewing device, preferably by the lower section lighting up when a vehicle has been overtaken and there is room for the host vehicle to move into the same lane as the overtaken vehicle and drive on ahead of it. This is advantageous where the host vehicle is long and it is difficult to assess when the overtaking has been completed. This case involves for example the use of radar sensors to assess the distance from the overtaken vehicle, and as the length of the host vehicle is known the lower section lights up when the distance from the vehicle overtaken is greater than the length of the host vehicle.

Alternatively, the lower section may be illuminated where a vehicle is alongside the host vehicle, and when the vehicle has been overtaken the lower section may be extinguished and the upper section illuminated when there is room to move back in ahead of the overtaken vehicle.

Figures 2 and 3 are schematic diagrams of a road with two traffic lanes illustrating the present invention.

They show the viewing device 4 with sensors adapted to measurement of parameters, e.g. speed, related to vehicles in adjacent traffic lanes, as schematically illustrated by dotted lines.

The host vehicle A overtakes a vehicle B which in Figure 2 is in the overtaking zone 22, i.e. the warning system is in the first state, which is indicated for the driver by presenting the first indication.

In Figure 3 the host vehicle has overtaken vehicle B, which is no longer in the overtaking zone 22. The overtaking state of the warning system has here changed to the second state, which is indicated for the driver by presenting the second indication.

The present invention is not restricted to the preferred embodiments described above. The above embodiments are therefore not to be regarded as limiting the invention's protective scope which is defined by the attached claims.

## Claims

1. A warning system (2) for a vehicle, which system comprises at least one viewing device (4) with a viewing surface (6) adapted to present vehicles (8) which are in the vicinity of the vehicle,
a processing unit (10) adapted to receive one or more sensor signals (12) from one or more sensors which are adapted to measure one or more predetermined parameters of vehicles in the vehicle's vicinity and using said parameters as a basis for determining whether there is a vehicle in a predefined overtaking zone (22), wherein the warning system comprises at least one indicating means (14) situated close to said viewing device (4) and adapted to generate at least one overtaking indication (16) for presentation on or close to the viewing surface (6) of the viewing device, and the indicating means (14) is adapted to indicate the location of said vehicle in corresponding parts of the viewing surface (6) in response to a display signal (18) generated by said processing unit (10), **characterised in that** said overtaking zone (22) is defined as a region in an adjacent traffic lane, which region is related to said vehicle's size in such a way that the length of the overtaking zone (22) is the length of the vehicle plus a predetermined safety length, and **in that** the warning system is adapted to be in either of two overtaking states of an ongoing overtaking maneuver, comprising a first state and a second state, such that the first state applies when there is at least one vehicle (8) in said overtaking zone (22) and the second state applies when there are no vehicles in said overtaking zone (22), **in that** said overtaking indication (16) is adapted to change on the basis of said overtaking states, **in that** one of said parameters is related to the speed of said vehicle vₒ such that the processing unit (10) is adapted to compare this speed with the vehicle's speed v by determining Δv=v-vₒ, **in that** another one of said parameters is related to the acceleration of said vehicle Aₒ such that the processing unit (10) is adapted to compare this acceleration with the vehicle's acceleration A by determining a difference of acceleration ΔA=A-A_{ο}, and **in that** said second state applies if there are no vehicles in said overtaking zone (22) and both Δv and ΔA are greater than or equal to zero.

2. The warning system according to claim 1, in which the overtaking indication (16) takes the form of a first indication when said first state applies and a second indication when said second state applies.

3. The warning system according to claim 1 or 2, in which said indicating means (14) is adapted to generating one or more optical signals when said first state changes to said second state in response to said display signal (18).

4. The warning system according to any one of the foregoing claims, in which said viewing device (4) takes the form of at least one rearview mirror.

5. The warning system according to any one of the foregoing claims, in which said processing unit is adapted to superimposing said overtaking indication (16) on the image of the object so that the overtaking indication surrounds said object.

6. The warning system according to any one of the foregoing claims, in which said indicating means (14) is situated behind said viewing surface (6), which takes the form of a semitransparent reflective surface.

7. The warning system according to any one of the foregoing claims, in which said indicating means (14) is situated along the edge of the viewing surface (6).

8. The warning system according to any one of the foregoing claims, in which said indicating means (14) takes the form of LEDs.

9. The warning system according to any one of claims 1-8 in which said viewing device (4) takes the form of a VDU.

## Patentansprüche

1. Warnsystem (2) für ein Fahrzeug, wobei das System mindestens eine Sichtvorrichtung (4) mit einer Sichtfläche (6) umfasst, die geeignet ist, Fahrzeuge (8) zu darzustellen, die sich in der Nähe des Fahrzeugs befinden,
eine Verarbeitungseinheit (10), die dazu ausgelegt ist, ein oder mehrere Sensorsignale (12) von einem oder mehreren Sensoren zu empfangen, die dazu ausgelegt sind, einen oder mehrere vorbestimmte Parameter von Fahrzeugen in der Nähe des Fahrzeugs zu messen, und die diese Parameter als Grundlage für die Bestimmung, ob sich ein Fahrzeug in einer vorbestimmten Überholzone (22) befindet, verwendet,
wobei das Warnsystem mindestens ein Anzeigemittel (14) umfasst, das sich in der Nähe der Sichtvorrichtung (4) befindet und dazu ausgelegt ist, mindestens eine Überholanzeige (16) zur Darstellung auf oder nahe der Sichtfläche (6) der Sichtvorrichtung zu erzeugen, und das Anzeigemittel (14) dazu ausgelegt ist, den Standort des Fahrzeugs in entsprechenden Teilen der Sichtfläche (6) als Reaktion auf ein von der Verarbeitungseinheit (10) erzeugtes Anzeigesignal (18) anzuzeigen, **dadurch gekennzeichnet, dass** die Überholzone (22) als ein Bereich in einer angrenzenden Fahrspur definiert ist, wobei der Bereich mit der Größe des Fahrzeugs derart in Beziehung steht, dass die Länge der Überholzone (22) der Länge des Fahrzeugs plus einer vorbestimmten Sicherheitslänge entspricht, und dass das Warnsystem dazu ausgelegt ist, sich in einem von zwei Überholungszuständen eines laufenden Überholmanövers zu befinden, die einen ersten Zustand und einen zweiten Zustand umfassen, sodass der erste Zustand zutrifft, wenn sich mindestens ein Fahrzeug (8) in der Überholzone (22) befindet, und der zweite Zustand zutrifft, wenn sich keine Fahrzeuge in der Überholzone (22) befinden, dass die Überholanzeige (16) dazu ausgelegt ist, sich auf der Grundlage der Überholzustände zu ändern, dass einer der Parameter mit der Geschwindigkeit des Fahrzeugs v₀ in Beziehung steht, sodass die Verarbeitungseinheit (10) dazu ausgelegt ist, diese Geschwindigkeit mit der Geschwindigkeit v des Fahrzeugs zu vergleichen, indem sie Δv = v - v₀ bestimmt, dass ein anderer der genannten Parameter mit der Beschleunigung A₀ des Fahrzeugs in Beziehung steht, sodass die Verarbeitungseinheit (10) dazu ausgelegt ist, diese Beschleunigung mit der Beschleunigung A des Fahrzeugs zu vergleichen, indem eine Differenz der Beschleunigung ΔA = A - A₀ bestimmt wird, und dass der zweite Zustand zutrifft, wenn sich keine Fahrzeuge in der Überholzone (22) befinden und sowohl Δv als auch ΔA größer oder gleich Null sind.

2. Warnsystem nach Anspruch 1, wobei die Überholanzeige (16) die Form einer ersten Anzeige annimmt, wenn der erste Zustand zutrifft, und einer zweiten Anzeige, wenn der zweite Zustand zutrifft.

3. Warnsystem nach Anspruch 1 oder 2, wobei das Anzeigemittel (14) dazu ausgelegt ist, ein oder mehrere optische Signale zu erzeugen, wenn der erste Zustand als Reaktion auf das Anzeigesignal (18) in den zweiten Zustand wechselt.

4. Warnsystem nach einer der vorhergehenden Ansprüche, wobei die Sichtvorrichtung (4) die Form von mindestens einem Rückspiegel annimmt.

5. Warnsystem nach einem der vorhergehenden Ansprüche, wobei die Verarbeitungseinheit dazu ausgelegt ist, die Überholanzeige (16) dem Bild des Objekts zu überlagern, sodass die Überholanzeige das Objekt umgibt.

6. Warnsystem nach einer der vorhergehenden Ansprüche, wobei sich das Anzeigemittel (14) hinter der Sichtfläche (6) befindet, die die Form einer halbtransparenten, reflektierenden Oberfläche annimmt.

7. Warnsystem nach einer der vorhergehenden Ansprüche, wobei sich das Anzeigemittel (14) entlang des Randes der Sichtfläche (6) befindet.

8. Warnsystem nach einer der vorhergehenden Ansprüche, wobei das Anzeigemittel (14) die Form von LEDs annimmt.

9. Warnsystem nach einem der Ansprüche 1 bis 8, wobei die Sichtvorrichtung (4) die Form einer Bildschirmeinheit annimmt.

## Revendications

1. Système d'avertissement (2) pour un véhicule, lequel système comprend au moins un dispositif de visualisation (4) avec une surface de visualisation (6) adaptée pour présenter des véhicules (8) qui sont à proximité du véhicule,
une unité de traitement (10) adaptée pour recevoir un ou plusieurs signaux de capteur (12) en provenance d'un ou plusieurs capteurs qui sont adaptés pour mesurer un ou plusieurs paramètres prédéterminés de véhicules à proximité du véhicule et utilisant lesdits paramètres comme base pour déterminer s'il y a un véhicule dans une zone de dépassement prédéfinie (22), dans lequel
le système d'avertissement comprend au moins un moyen indicateur (14) situé à proximité dudit dispositif de visualisation (4) et adapté pour générer au moins une indication de dépassement (16) à présenter sur ou à proximité de la surface de visualisation (6) du dispositif de visualisation, et le moyen indicateur (14) est adapté pour indiquer l'emplacement dudit véhicule dans des parties correspondantes de la surface de visualisation (6) en réponse à un signal d'affichage (18) généré par ladite unité de traitement (10), **caractérisé en ce que**
ladite zone de dépassement (22) est définie comme une région dans une voie de circulation adjacente, laquelle région est liée à la taille dudit véhicule de telle manière que la longueur de la zone de dépassement (22) soit la longueur du véhicule plus une longueur de sécurité prédéterminée, et **en ce que** le système d'avertissement est adapté pour se trouver dans l'un des deux états de dépassement d'une manœuvre de dépassement en cours, comprenant un premier état et un second état, de telle sorte que le premier état s'applique lorsqu'il y a au moins un véhicule (8) dans ladite zone de dépassement (22) et le second état s'applique lorsqu'il n'y a pas de véhicule dans ladite zone de dépassement (22), **en ce que** ladite indication de dépassement (16) est adaptée pour changer sur la base desdits états de dépassement, **en ce qu'**un premier desdits paramètres est lié à la vitesse dudit véhicule Vₒ de telle sorte que l'unité de traitement (10) est adaptée pour comparer cette vitesse avec la vitesse de véhicule v en déterminant Δv = V-Vₒ, **en ce qu'**un autre desdits paramètres est lié à l'accélération dudit véhicule Aₒ, de telle sorte que l'unité de traitement (10) est adaptée pour comparer cette accélération avec l'accélération de véhicule A en déterminant une différence d'accélération ΔA = A-Aₒ, et **en ce que** ledit second état s'applique s'il n'y a pas de véhicule dans ladite zone de dépassement (22) et à la fois Δv et ΔA supérieures ou égales à zéro.

2. Système d'avertissement selon la revendication 1, dans lequel l'indication de dépassement (16) prend la forme d'une première indication lorsque ledit premier état s'applique et d'une seconde indication lorsque ledit second état s'applique.

3. Système d'avertissement selon la revendication 1 ou 2, dans lequel lesdits moyens indicateurs (14) sont adaptés pour générer un ou plusieurs signaux optiques lorsque ledit premier état passe audit second état en réponse audit signal d'affichage (18).

4. Système d'avertissement selon l'une quelconque des revendications précédentes, dans lequel ledit dispositif de visualisation (4) prend la forme d'au moins un rétroviseur.

5. Système d'avertissement selon l'une quelconque des revendications précédentes, dans lequel ladite unité de traitement est adaptée pour superposer ladite indication de dépassement (16) sur l'image de l'objet de sorte que l'indication de dépassement entoure ledit objet.

6. Système d'avertissement selon l'une quelconque des revendications précédentes, dans lequel lesdits moyens indicateurs (14) sont situés derrière ladite surface de visualisation (6), qui prend la forme d'une surface réfléchissante semi-transparente.

7. Système d'avertissement selon l'une quelconque des revendications précédentes, dans lequel lesdits moyens indicateurs (14) sont situés le long du bord de la surface de visualisation (6).

8. Système d'avertissement selon l'une quelconque des revendications précédentes, dans lequel lesdits moyens indicateurs (14) prennent la forme de diodes électroluminescentes, DEL.

9. Système d'avertissement selon l'une quelconque des revendications 1 à 8, dans lequel ledit dispositif de visualisation (4) prend la forme d'une unité d'affichage vidéo, VDU.
